# DEMANDE DE BREVET EUROPEEN

(11) **EP 1 079 489 A1**
(43) Date de publication de la demande: **28.02.2001**
(21) Numéro de dépôt: 00402305.7
(22) Date de dépôt: 17.08.2000
(51) Int. Cl.: H02B 5/00

(54) **Poste électrique à double jeu de barres et appareil de coupure et d'aiguillage destiné à être utilisé dans ce poste**

(30) Priorité: 25.08.1999 FR 9910790
(71) Demandeur: Alstom, 75116 Paris (FR)
(72) Inventeur: Roussel, Philippe, 69740 Genas (FR); Luscan, Bruno, 69003 Lyon (FR); Libaud, Alain, 69460 St. Etienne des Oullieres (FR)
(74) Mandataire: Hagel, Francis

(57) **Abrégé**

L'invention concerne un poste électrique à deux jeux de barres (23,24) logés chacun entre une rangée centrale (40) de colonnes métalliques (25) et une rangée latérale parallèle (41,42) de colonnes métalliques (26,27). Dans la rangée centrale (40), chaque couple de colonnes métalliques (25) voisines supporte une poutre métallique (7) horizontale sensiblement parallèle à ladites rangée et supportant elle même au moins une paire d'isolateurs chacune affectée à une phase du poste, chaque isolateur (13,14) portant à une extrémité un contact fixe (8B,9B) électriquement relié par un câble (10,11) à une barre (3,4) transportant ladite phase. Le poste intègre par phase un appareil de coupure et d'aiguillage regroupant un disjoncteur et deux sectionneurs (8, 9), l'appareil pouvant être déplacé entre une position hors service où il est hors tension et une position de service où il est connecté à la tension et est immobilisé entre deux colonnes centrales (25).

## Description

La présente invention se rapporte à un poste électrique à double jeu de barres et à un appareil de coupure et d'aiguillage destiné à être utilisé dans ce poste.

Les installations à double jeu de barres sont celles les plus fréquemment utilisés pour des tensions de 72,5 à 245 kV.

Ce genre d'installation comprend généralement par phase
- une chambre de coupure à laquelle est connectée une ligne d'arrivée,
- une barre conductrice transportant ladite phase dans chaque jeu de barres,
- deux sectionneurs reliés électriquement à la sortie de la chambre de coupure et assurant chacun pour un jeu de barres la connexion ou la déconnexion électrique de la barre transportant ladite phase.

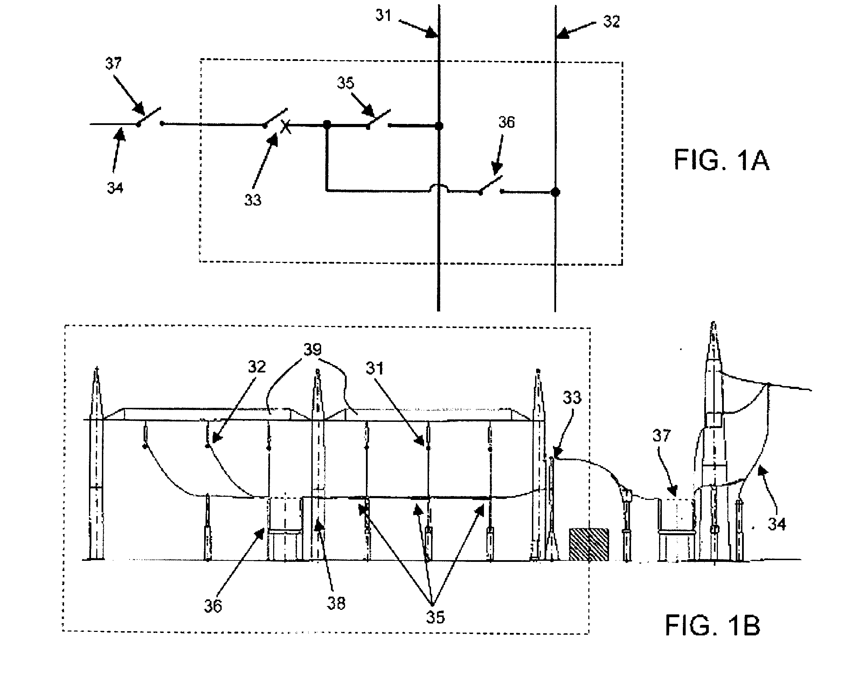

De tels postes à double jeu de barres, dont le schéma électrique classique est représenté pour une phase sur la figure 1A, comprennent généralement par phase une chambre de coupure 33 raccordée en entrée à une ligne d'alimentation électrique 34. La sortie de ladite chambre de coupure est reliée à un câble qui se scinde en deux lignes pour aboutir à deux sectionneurs (35, 36) permettant de transmettre l'énergie électrique à l'une ou l'autre (ou l'une et l'autre) des barres 31 et 32 transportant ladite phase sur chacun des deux jeux de barres. Un sectionneur de ligne 37 permet la déconnexion électrique de la ligne d'alimentation en amont de la chambre de coupure.

Il est ainsi possible d'alimenter dans un poste l'un ou l'autre ou l'un et l'autre des deux jeux de barres par un agencement approprié de fermeture des sectionneurs. Chaque barre est électriquement reliée à un sectionneur qui lui est affecté, généralement situé sous ladite barre ou sous une autre barre du même jeu de barres.

Un exemple de poste triphasé selon ce type d'architecture classique est représenté à la figure 1B par une vue en coupe sur laquelle les sectionneurs (35,36) sont représentés pour les trois phases. Les jeux de barres sont perpendiculaires au plan de la figure et sont portés par des poutres métalliques horizontales transversales 39 elles mêmes chacune supportée par une colonne métallique centrale 38 et une colonne métallique latérale. Les colonnes latérales représentées sont situées de part et d'autre de la colonne centrale 38 et sont alignées avec cette dernière. Un seul sectionneur 36 est visible sous le jeu de barres de gauche puisque les sectionneurs 36 sont alignés parallèlement à ce jeu de barres. Les sectionneurs 35 sont représentés dans le même plan de la figure, mais sont en réalité espacés dans la direction des jeux de barres. La chambre de coupure 33 et les sectionneurs affectés aux barres 31 et 32 de même phase sont disposés en alignement.

Il apparaît qu'un tel poste occupe une surface au sol importante et comporte un nombre d'équipements important. En outre, la maintenance et l'évacuation de sectionneurs défectueux est rendue difficile par l'encombrement de l'espace situé sous les deux jeux de barres.

L'invention résout ce problème d'encombrement et de maintenance tout en réduisant le coût des équipements nécessaires. Grâce au poste objet de l'invention, l'encombrement est réduit d'environ 40% en surface au sol. En outre, la maintenance et le transport des appareils de coupure et d'aiguillage sont grandement facilités par rapport à une architecture de poste conventionnelle telle que décrite précédemment.

A cet effet, l'invention a pour objet un poste électrique à deux jeux de barres logés chacun entre une rangée centrale et une rangée latérale parallèle de colonnes métalliques, caractérisé en ce que dans la rangée centrale, chaque couple de colonnes métalliques voisines supporte une poutre métallique horizontale sensiblement parallèle à ladite rangée et supportant elle même au moins une paire d'isolateurs chacune affectée à une phase du poste, chaque isolateur portant à une extrémité un contact fixe électriquement relié par un câble à une barre transportant ladite phase.

L'invention est également relative à un appareil de coupure et d'aiguillage destiné à être installé dans un tel poste et constitué d'une chambre de coupure qui supporte en partie haute deux sectionneurs chacun électriquement connecté par une de ses extrémités à la sortie de la chambre de coupure et comportant à son autre extrémité un contact mobile destiné en position fermée à venir en connexion électrique avec une barre par l'intermédiaire d'un câble. L'appareil peut être déplacé entre une position hors service où il est hors tension et une position de service où il est connecté à la tension et est immobilisé entre deux colonnes centrales.

L'invention est décrite ci-après plus en détail à l'aide de figures ne représentant qu'un mode de réalisation préféré de l'invention.

La figure 1A représente le schéma électrique classique pour une phase d'un poste à double jeu de barres tel que présenté en préambule.

La figure 1B représente un poste à double jeu de barres classique tel que présenté en préambule.

La figure 2 est une vue de face d'un poste selon l'invention.

La figure 3 est une vue en coupe longitudinale d'un appareil selon l'invention en position fermée.

La figure 4 est une vue en coupe longitudinale d'un appareil selon l'invention en position ouverte.

La figure 5 est une vue en perspective d'un poste tel que représenté en coupe à la figure 2.

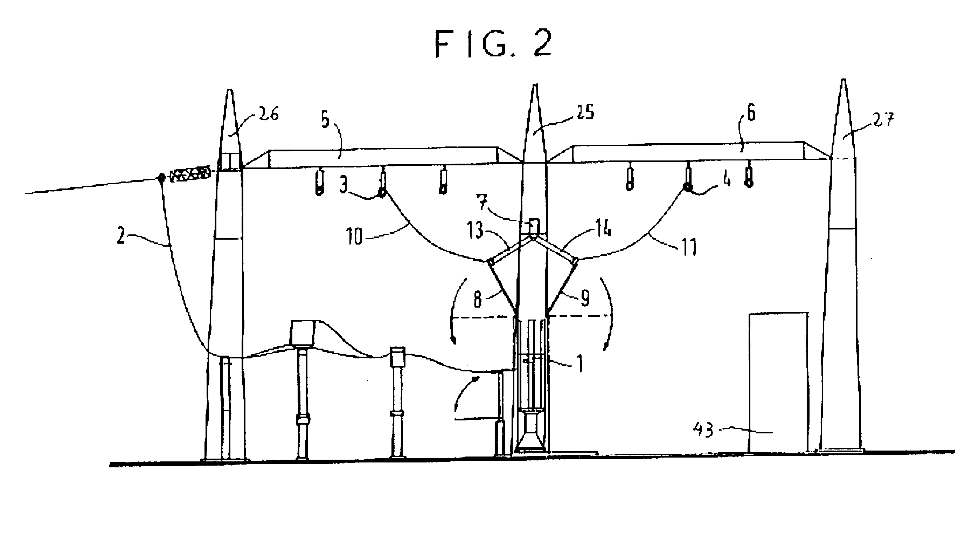

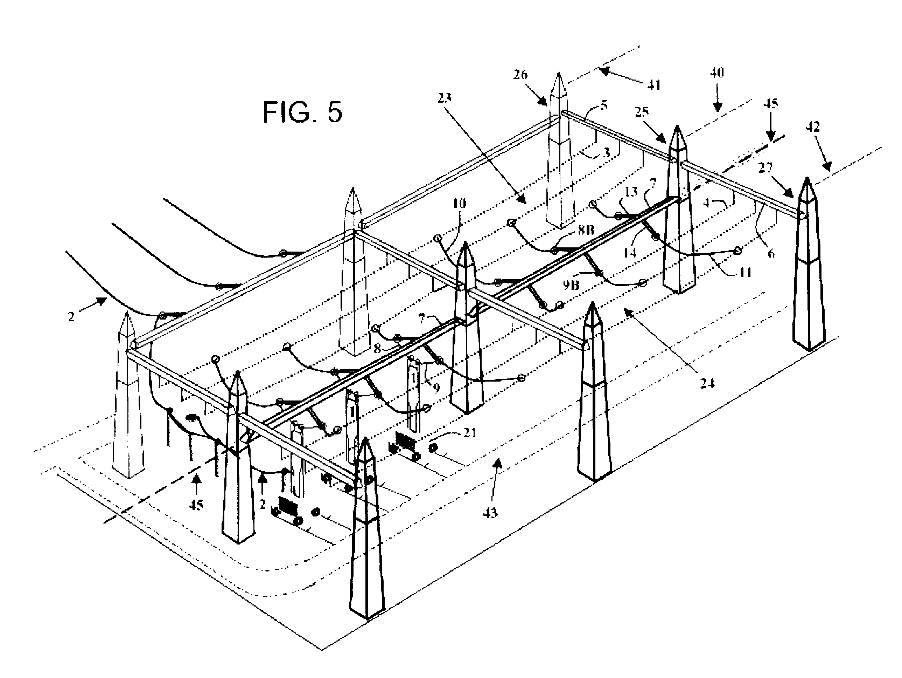

Comme représenté aux figures 2 et 5, un poste électrique à double jeu de barres selon l'invention comprend une rangée centrale 40 de colonnes métalliques 25 et deux rangées latérales parallèle 41,42 de colonnes métalliques 26,27. Chaque couple de colonnes 25 voisines supporte une poutre métallique 7 horizontale préférablement parallèle auxdites rangées et supportant elle même au moins une paire d'isolateurs 13 et 14. Chaque paire est affectée à une phase du poste, et chaque isolateur 13,14 porte à une extrémité un contact fixe 8B,9B électriquement relié par un câble 10,11 à une barre 3,4 transportant ladite phase sur un jeu de barres 23,24 supporté par une poutre métallique transversale 5,6. Le poste intègre par phase un appareil de coupure et d'aiguillage regroupant
- un disjoncteur comprenant une chambre de coupure 1 sensiblement verticale à laquelle est connectée une ligne d'arrivée 2,
- deux sectionneurs 8 et 9 reliés électriquement à la sortie 12 de la chambre de coupure 1 et assurant chacun la connexion ou la déconnexion électrique d'une barre 3 ou 4.

Selon le mode de réalisation préféré représenté, les sectionneurs sont de type à coupure verticale. Ils peuvent toutefois être d'un autre type, par exemple de type pantographe.

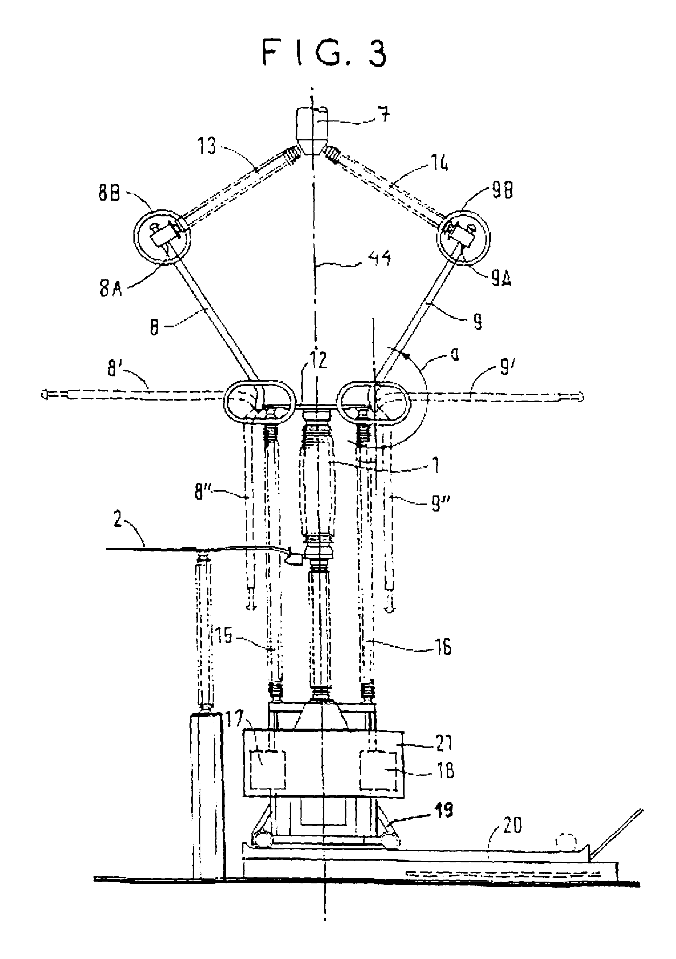

Figure 3, l'appareil peut être déplacé entre une position hors service où il est hors tension et une position de service où il est connecté à la tension et est immobilisé entre deux colonnes centrales 25. Dans le mode de réalisation préféré représenté, l'axe vertical de la chambre de coupure coupe l'axe horizontal de la poutre 7. Pour tout mode de réalisation selon l'invention, ledit axe vertical est distant de moins d'un mètre de la poutre horizontale 7.

Les deux bras de sectionneur 8 et 9 sont montés pivotants sur la sortie 12 constituée d'une plaque métallique fixée au sommet de la chambre de coupure 1 et disposés de part et d'autre de ladite chambre. A leur autre extrémité, ces bras de sectionneur comportent chacun un contact mobile 8A,9A qui, en position fermée, vient se connecter à un contact fixe 8B,9B porté par une des extrémités d'un isolateur 13,14 lui même supporté par la poutre horizontale 7. Les contacts fixes 8B et 9B sont chacun reliés à un câble 10,11 relié à une barre 3, 4.

L'entraînement en pivotement des bras de sectionneur 8 et 9 est réalisé respectivement par une colonne tournante 15 et 16 montée parallèlement à la chambre de coupure 1 et commandée par un agencement de commande 17 et 18 monté sur un châssis support 19. Les bras de sectionneurs 8 et 9 peuvent prendre trois positions :
- une position fermée (représentée en traits pleins sur la figure 2) où les contacts mobiles 8A et 9A sont connectés aux contacts fixes 8B et 9B et où les bras de sectionneurs 8, 9 sont inclinés d'un angle (a) par rapport à l'axe longitudinal vertical de l'appareil, préférablement compris entre 135° et 160°;
- une position ouverte horizontale 8' et 9' (représentée en traits pointillés sur la figure 2) où les bras de sectionneur 8 et 9 sont sensiblement horizontaux selon le mode de réalisation préféré ;
- une position basse dite de transport 8" et 9" où ils sont disposés sensiblement verticalement le long de la chambre de coupure 1 (également représentée en traits pointillés sur la figure 2). Chaque bras de sectionneur 8 ou 9 est actionné de façon classique par une colonne tournante 15 ou 16 entraînée par un agencement de commande indépendant 17 ou 18, afin de permettre la connexion de l'une ou l'autre (ou de l'une et l'autre) des deux barres 3 et 4.

Avantageusement, les agencements de commande sont logés dans une cabine unique 21 au bas de l'appareil où peuvent être regroupés les organes de manoeuvre, les éléments de commande basse tension et les éléments d'interverrouillage (gérant les déplacements possibles des contacts de la chambre de coupure et des bras de sectionneurs). La chambre de coupure 1 possède son propre agencement de commande, pouvant couper le passage du courant pendant qu'au moins un des sectionneurs reste fermé.

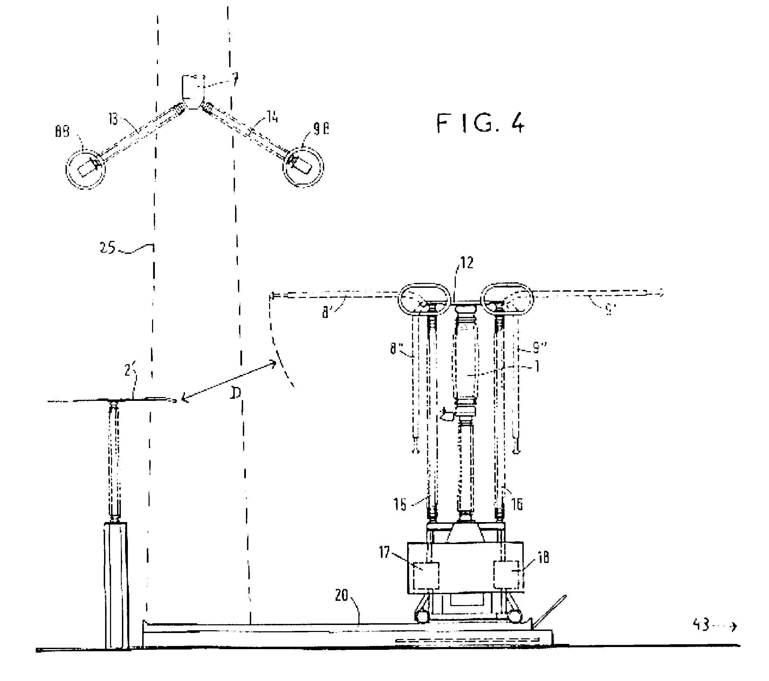

De préférence, l'appareil est monté sur un châssis support 19 qui peut être déplacé perpendiculairement au jeu de barres sur des rails 20. Cet agencement permet le déplacement latéral de l'appareil comme représenté sur la figure 4, où l'appareil est débroché c'est-à-dire déconnecté de la ligne d'alimentation 2. Ce perfectionnement présente l'avantage de supprimer la nécessité du sectionneur de ligne 37 représenté à la figure 1B et indispensable dans l'art antérieur .

Cet agencement de déplacement latéral peut être également utilisé pour les opérations de maintenance de l'appareil, même si les jeux de barres sont maintenus sous tension. L'appareil est déplacé sur les rails 20 avec les bras de sectionneur en position ouverte horizontale, pour être immobilisé en butée dans une position hors service dite de sécurité. Dans un mode préféré de réalisation représenté à la figure 4, un bras de sectionneur 8 peut passer de la position horizontale 8' à la position de transport 8" tout en restant à une distance D d'isolation suffisante de l'élément de connexion 2' de la ligne d'alimentation 2. Une fois les deux bras repliés en position de transport, l'appareil peut être aisément évacué jusqu'à une allée d'accès 43 par des moyens classiques, grâce à l'aire de maintenance ménagée entre cette allée d'accès et la rangée centrale 40.

Avantageusement, l'appareil peut être équipé d'au moins un transformateur de courant, disposé soit en entrée de la chambre de coupure 1, soit en sortie entre celle-ci et un bras de sectionneur 8,9.

## Revendications

1. Poste électrique à deux jeux de barres (23,24) logés chacun entre une rangée centrale (40) de colonnes métalliques (25) et une rangée latérale parallèle (41,42) de colonnes métalliques (26,27), caractérisé en ce que dans ladite rangée centrale (40), chaque couple de colonnes métalliques (25) voisines supporte une poutre métallique (7) horizontale sensiblement parallèle à ladite rangée et supportant elle même au moins une paire d'isolateurs chacune affectée à une phase du poste, chaque isolateur (13,14) portant à une extrémité un contact fixe (8B,9B) électriquement relié par un câble (10,11) à une barre (3,4) transportant ladite phase.

2. Poste électrique selon la revendication 1, intégrant par phase un appareil de coupure et d'aiguillage regroupant
- un disjoncteur comprenant une chambre de coupure (1) montée verticalement sur une cabine (21) portée par un châssis support (19),
- deux sectionneurs (8, 9) constitués de bras conducteurs montés pivotants sur la partie haute du disjoncteur et connectés électriquement à sa sortie (12), actionnés chacun par l'intermédiaire d'une colonne (15,16) entraînée par un agencement de commande (17,18),
dans lequel l'appareil de coupure et d'aiguillage peut être déplacé entre une position hors service où il est hors tension et une position de service où il est connecté à la tension et est immobilisé entre deux colonnes centrales (25) de telle façon que l'axe vertical (44) de la chambre de coupure est distant de moins d'un mètre de la poutre (7).

3. Poste électrique selon la revendication 2 dans lequel ledit axe vertical (44) coupe l'axe horizontal (45) de la poutre (7).

4. Poste électrique selon l'une des revendications 2 et 3 dans lequel la chambre de coupure (1) possède son propre agencement de commande, logé dans la même cabine unique (21) que les agencements de commande des sectionneurs (17,18) et indépendant de ces derniers, pouvant couper le passage du courant pendant qu'au moins un des sectionneurs reste fermé.

5. Poste électrique selon l'une des revendications 2 à 4 dans lequel les bras de sectionneurs de l'appareil de coupure et d'aiguillage peuvent prendre une position (8",9") dite de transport où ils sont en position basse sensiblement verticale le long de la chambre de coupure.

6. Poste électrique selon l'une des revendications 2 à 5 dans lequel l'appareil de coupure et d'aiguillage peut être déplacé sur des rails (20) et immobilisé en butée dans une position hors service dite de sécurité où un bras de sectionneur (8) peut passer d'une position horizontale (8') à une position de transport (8") tout en restant à une distance D d'isolation suffisante de l'élément de connexion (2') de la ligne d'alimentation (2).

7. Poste électrique selon l'une des revendications 2 à 6 dans lequel une allée d'accès (43) pour maintenance est ménagée dans l'espace entre la rangée centrale (40) et une rangée latérale (42), et dans lequel l'appareil de coupure et d'aiguillage peut être déplacé depuis sa position de service jusqu'à ladite allée d'accès.

8. Poste électrique selon l'une des revendications 2 à 7 dans lequel un transformateur de courant est installé sur la chambre de coupure (1).
